# FASCICULE DE BREVET EUROPEEN

(11) **EP 1 720 263 B1**
(45) Date de publication et mention de la délivrance du brevet: **14.11.2007**
(21) Numéro de dépôt: 06290708.4
(22) Date de dépôt: 03.05.2006
(51) Int. Cl.: H04B 1/707, H04L 7/00

(54) **Dispositif de réception avec mécanisme de récupération de données, adapté à un système de transmission utilisant un étalement de spectre à séquence directe**
An ein Direct Sequence Spread Spectrum DSSS Übertragungssystem angepasstes Empfangsgerät mit Mechanismus zur Datenwiederherstellung
Reception device with mechanism for data regeneration adapted to a Direct Sequence Spread Spectrum DSSS transmission system

(30) Priorité: 04.05.2005 FR 0504592
(43) Date de publication de la demande: 08.11.2006
(73) Titulaire: STMicroelectronics (Rousset) SAS, 13106 Rousset (FR); Université de Provence (Aix-Marseille 1), 13331 Marseille Cedex 3 (FR)
(72) Inventeur: Durand, Benoît, 13790 Rousset (FR); Fraschini, Christophe, 83130 La Garde (FR)
(74) Mandataire: Bentz, Jean-Paul

(56) Documents cités:
- EP-A- 0 884 856
- WO-A-99/31817
- US-A1- 2003 123 408

## Description

L'invention concerne, de manière générale, le traitement des signaux numériques et, notamment, les techniques de décodage de tels signaux dans des applications de communication numérique radio-fréquence.

L'invention concerne plus précisément un dispositif de réception, notamment adapté à un système de transmission utilisant une modulation binaire en phase de la porteuse (BPSK, pour « Binary Phase Shift Keying ») par un message binaire sur lequel a été pratiqué un étalement de spectre à séquence directe (DSSS, pour « direct Spread Spectrum Sequence »).

Dans un système de transmission d'un signal numérique utilisant un étalement de spectre à séquence directe, les bits "0" et "1" sont codés par des symboles respectifs d'une longueur dépendant de la séquence d'étalement utilisé, puis envoyés par l'émetteur. Les symboles sont ensuite réceptionnés et décodés, au niveau du récepteur, par décodeur DSSS constitué classiquement par un filtre à réponse finie.

Dans le cas où les bits sont codés en utilisant un code de Barker de longueur N, les symboles codant les bits "0" et "1" se présentent chacun sous la forme d'une série de N éléments de symbole (« 0 » ou « 1 »), dénommés « chips », distribués sur l'un ou l'autre de deux niveaux différents (-1 et 1) et délivrés à une fréquence fixe prédéterminée F.

Les éléments de symbole codant le bit "1" sont anti-corrélés aux éléments de symbole correspondants codant le bit "0", c'est-à-dire que les éléments de symbole de même rang dans l'un et l'autre de ces deux symboles ont des valeurs opposées.

Par exemple, dans la mesure où un élément de symbole du symbole codant le bit "1" est au niveau 1, l'élément de symbole correspondant du symbole codant le bit "0" est au niveau -1. De même, dans la mesure où un élément de symbole du symbole codant le bit "1" est au niveau -1, l'élément de symbole correspondant du symbole codant le bit "0" est au niveau 1.

Le message binaire étalé est alors utilisé pour moduler en phase la porteuse, se présentant sous la forme d'une onde sinusoïdale fonction du temps notée p(t), p(t)=cos(2πfp.t+ϕ), où fp est sa fréquence et ϕ sa phase à l'origine.

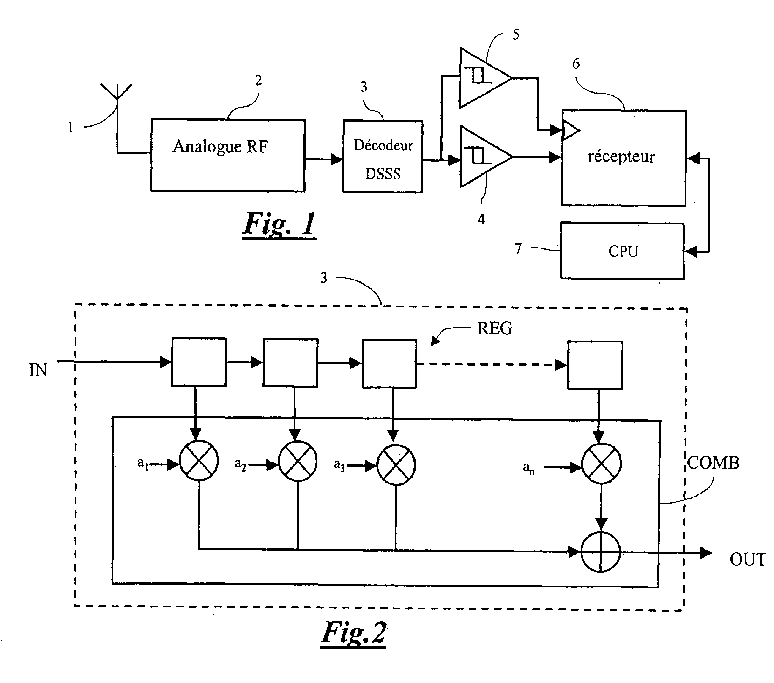

La figure 1 illustre l'architecture d'une chaîne de réception dans un système de transmission utilisant un étalement de spectre à séquence direct. Cette architecture conduit classiquement à interfacer des modules radio analogiques 2 avec un système de traitement numérique comprenant le décodeur DSSS 3. Ainsi, le signal numérique est d'abord capté par une antenne 1, puis est transmis au bloc analogique radio-fréquences 2 de la chaîne.

Le bloc analogique radio-fréquence comprend typiquement un amplificateur à faible bruit, un oscillateur local associé à un mélangeur, coopérant pour ramener le signal en bande de base, et un étage de filtrage. On dispose plus précisément en sortie du mélangeur, du message binaire sous forme continue en bande de base, ajouté à une composante haute fréquence centrée sur deux fois la fréquence porteuse. En effet, cette opération de démodulation fait apparaître le motif spectral du signal en bande de base, mais aussi à deux fois la fréquence de démodulation, c'est-à-dire autour de la fréquence 2fp. Aussi, un étage de filtrage passe-bas est nécessaire en sortie du mélangeur pour supprimer la distorsion harmonique due à la redondance du spectre lors de la démodulation du signal. On retrouve alors en sortie du filtre passe-bas uniquement le message en bande de base, c'est-à-dire ramené autour de la fréquence 0.

Le signal résultant est ensuite numérisé par un convertisseur analogique/numérique (CAN). Il est échantillonné à une fréquence d'échantillonnage respectant la limite de Shannon. En d'autres termes, la fréquence d'échantillonnage est prise égale à au moins deux fois la fréquence maximum présentée par la densité spectrale de puissance du message étalé en bande de base.

Les éléments décrits succinctement ci-dessus ne voyant pas leur fonctionnement modifié dans le cadre de la présente invention, ils ne seront pas décrits plus en détail.

En sortie du CAN, le signal est ensuite envoyé au décodeur DSSS 3, permettant de réaliser la récupération de la synchronisation du signal à décoder par rapport à l'information utile. Plus précisément, il s'agit d'un filtre numérique à réponse impulsionnelle finie, caractérisé par les coefficients {aᵢ}_{i=0,1,...,n} de sa réponse impulsionnelle. Le processus de décodage basé sur le filtre à réponse impulsionnelle finie consiste à faire correspondre la suite de coefficients aᵢ du filtre à la réplique exacte du code d'étalement choisi.

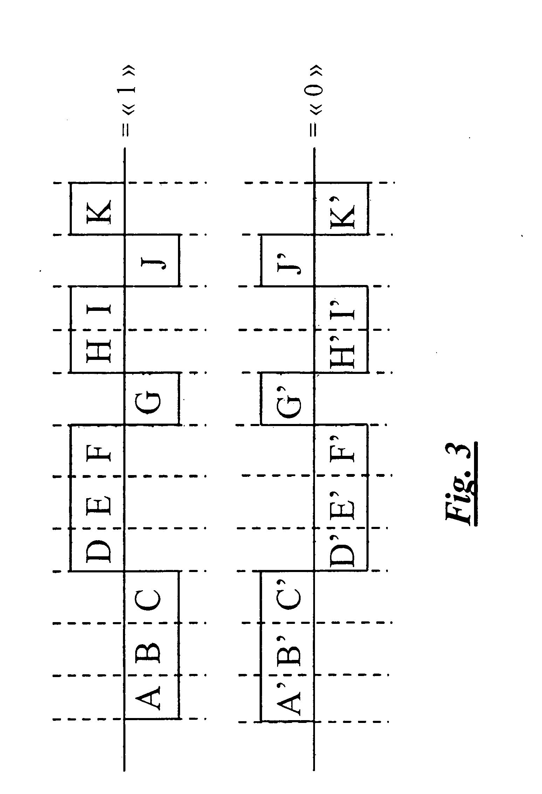

Un tel filtre, illustré à la figure 2, comprend typiquement un échantillonneur prévu pour capturer un échantillon du signal numérique d'entrée IN. Le filtre doit être cadencé à la même fréquence d'échantillonnage que celle du signal entrant. Sa structure est celle d'un registre à décalage REG recevant chaque échantillon du signal d'entrée IN. Le registre à décalage comprend N bascules dans le cas de symboles à N éléments de symbole, qui coopèrent avec un circuit combinatoire COMB, conçu de façon connue de l'homme du métier, et faisant intervenir la suite de coefficients aᵢ de manière que le signal de sortie OUT produit par le filtre présente une amplitude dépendant directement du niveau de corrélation constaté entre la séquence des N derniers échantillons capturés par ce filtre et la série des N éléments de symbole de l'un des deux symboles, par exemple la série des N éléments du symbole codant un bit "1" du signal numérique.

Ainsi, la suite de coefficients aᵢ consistant en la réplique exacte du code d'étalement choisi, permet de corréler les niveaux des éléments de symbole reçus successivement par le filtre sur son entrée, aux niveaux que présentent les éléments de symbole successifs de l'un des deux symboles utilisés pour coder les bits « 0 » et « 1 », par exemple les éléments de symbole du symbole codant le bit "1".

Ainsi, pour un code de Barker de longueur N=11, chaque symbole se compose de 11 éléments de symbole tels que A à K et A' à K', représentés en traits pleins sur la figure 1 respectivement pour un bit "1" et pour un bit "0".

Si par exemple, le filtre reçoit successivement des éléments de symboles A" à K" constitués à l'identique par les éléments de symbole A' à K' formant le symbole codant le bit 0, le signal de sortie qu'il délivrera en corrélant ces éléments de symbole aux éléments de symbole A à K aura une amplitude égale à - 11, ce total étant représenté par la somme des 11 valeurs élémentaires d'anti-corrélation égales à -1, dont la première rend compte de l'anti-corrélation entre A" (de niveau 1) et A (de niveau -1), dont la seconde rend compte de l'anti-corrélation entre B" (de niveau 1) et B (de niveau -1), etc., et dont la onzième rend compte de l'anti-corrélation entre K" (de niveau -1) et K (de niveau 1).

On constate donc que le symbole codant le bit 0 en entrée du filtre se manifeste en sortie par un pic de valeur -11 et, de la même manière, le symbole codant le bit 1 en entrée du filtre se manifeste en sortie par un pic de valeur 11.

La sortie du filtre à réponse impulsionnelle finie fournit donc des pics de synchronisation, dont le signe donne la valeur du bit du message d'origine à cet instant : si le pic est négatif, il s'agit d'un « 0 », et d'un « 1 » si le pic est positif.

Pour transformer les symboles ainsi décodés en un flux de données binaires correspondant au message d'origine et pour associer à ce flux une horloge de synchronisation associée pour la capture des données, ces pics sont passés dans des comparateurs à hystérésis, respectivement 4 et 5. Les données du message d'origine codées sur un bit, ainsi que le signal d'horloge de capture de données sont donc restituées en sortie des comparateurs à hystérésis 4 et 5.

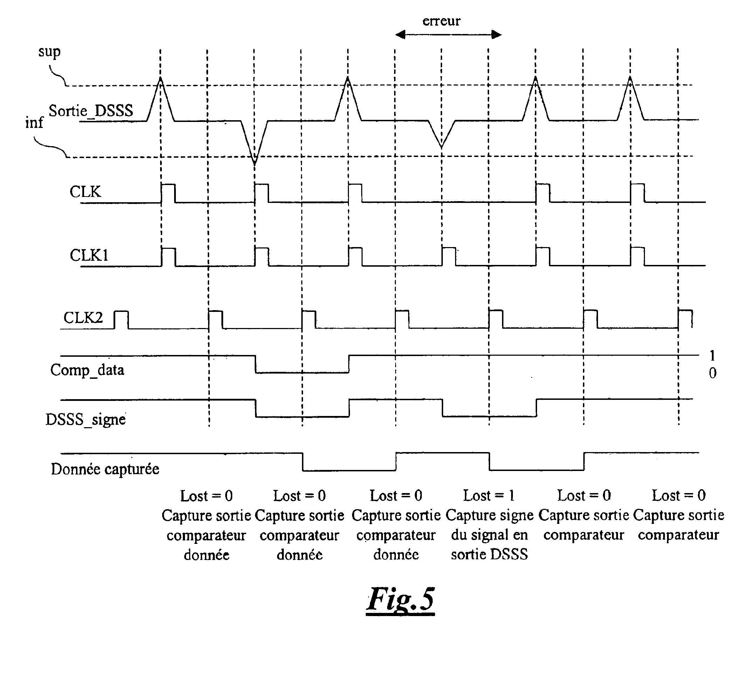

On peut alors se reporter à la figure 5, où sont représentés le signal de sortie du comparateur de données 4, noté comp_data, le signal de sortie du comparateur d'horloge 5, noté CLK, ainsi que le signal de sortie du décodeur DSSS, noté sortie_DSSS, appliqué à l'entrée des comparateurs. Les valeurs de seuil inférieur et supérieur des comparateurs, respectivement notées inf et sup, sont représentés en traits pointillés horizontaux au niveau du signal de sortie du DSSS.

Dans l'exemple ci-dessus, le signal de sortie du décodeur DSSS 3 est délivré au comparateur de données 4, propre à comparer l'amplitude de ce signal de sortie à une valeur de seuil inférieur inf par exemple fixée à -8, et à une valeur de seuil supérieur sup par exemple fixée à +8. Le comparateur de données 4 délivre alors, en tant que signal numérique de sortie comp_data, représentatif d'un symbole décodé du signal d'entrée appliqué au décodeur, un premier bit « 1 » lorsque l'amplitude du signal de sortie du décodeur DSSS est supérieure à la valeur de seuil supérieur sup, et un deuxième bit « 0 » lorsque l'amplitude du signal de sortie du décodeur DSSS est inférieure à la valeur de seuil inférieur inf.

Le signal de sortie du décodeur DSSS 3 est également appliqué au deuxième comparateur 5. Ce comparateur 5 d'horloge bascule dès que l'amplitude du signal de sortie du décodeur DSSS passe au-dessus ou au-dessous de la valeur de seuil inférieur inf et dès que le signal passe au-dessus ou au-dessous de la valeur de seuil supérieur sup et fournit alors un signal numérique CLK sur un bit qui sert d'horloge de capture pour les données. Il est à noter que les valeurs de seuils inférieur et supérieur peuvent être réglables.

Les signaux de sortie des comparateurs 4 et 5 sont alors traités par le récepteur 6, qui est cadencé pour capturer une donnée du signal de donnée généré en sortie, du comparateur de donnée 5 par exemple à chaque front montant du signal d'horloge généré par le comparateur d'horloge 4. Le comparateur est prévu pour mettre en oeuvre un certain nombre d'opérations telles que : détection du « start » et du « stop » du message, désembrouillage, correction des erreurs du message, stockage des donnés... Les séquences de « start » et de « stop » du message peuvent être une série de bits particulière mais il peut aussi ne pas y avoir de séquence de stop si la longueur du message est connue à l'avance. La correction des erreurs peut être faite par des techniques connues comme utilisation d'un CRC (pour « cyclic redundancy check »), utilisation de la parité, utilisation de codes correcteurs d'erreurs type Reed-Solomon.

Le CPU 7 (microprocesseur) lit les données reçues par le récepteur, ainsi que des informations complémentaires s'il y en a (état de la communication, interruption, erreurs détectées...).

Toutefois, ce dispositif de réception ne peut fonctionner correctement que lorsque le signal de sortie du décodeur DSSS, qui est appliqué à l'entrée des comparateurs ne comporte pas trop d'erreurs.

Par exemple, toujours dans le cadre de l'exemple de la figure 3, si le décodeur DSSS reçoit successivement des éléments de symboles A" à J" constitués à l'identique par les éléments de symbole A' à J', et un dernier élément de symbole K" égal à zéro à la suite d'un problème de transmission, le signal de sortie qu'il délivrera en corrélant ces éléments de symbole aux éléments de symbole A à K n'aura qu'une amplitude égale à -9, l'élément de symbole K" apportant une contribution de +1 à ce signal de sortie.

La situation serait bien sûr strictement la même si l'élément de symbole manquant n'était pas K" mais l'un quelconque des autres éléments de symbole.

De même si, par exemple, ce filtre reçoit successivement des éléments de symboles A" à I" constitués à l'identique par les éléments de symbole A à I, et deux derniers éléments de symbole J" et K" égaux à zéro à la suite d'un problème de transmission, le signal de sortie qu'il délivrera en corrélant ces éléments de symbole aux éléments de symbole A à K aura une amplitude égale à +7, ce total étant représenté par la somme des 9 valeurs élémentaires de corrélation égales à +1, dont la première rend compte de la corrélation entre A" (de niveau -1) et A (de niveau - 1), dont la seconde rend compte de la corrélation entre B" (de niveau -1) et B (de niveau -1), etc. , et dont la neuvième rend compte de la corrélation entre I" (de niveau 1) et I (de niveau 1), les éléments de symbole J" et K" apportant une contribution de -2 à ce signal de sortie.

Dans ces conditions, avec une valeur de seuil inférieur fixée à -8, et une valeur de seuil supérieur fixée à +8, le récepteur assimilera à un symbole codant le bit "1" la réception d'éléments de symbole successifs A" et K" ayant seulement 10 éléments de symbole corrélés aux éléments de symbole A à K (au lieu de 11), et assimilera à un symbole codant le bit "0" la réception d'éléments de symbole successifs A" et K" ayant seulement 10 éléments de symbole anti-corrélés aux éléments de symbole A à K (au lieu de 11).

On s'aperçoit donc que les défauts de transmission engendrant des erreurs dans le signal reçu peuvent, dans une certaine mesure, être surmontés en réglant les seuils inférieur et supérieur des comparateurs à des valeurs intermédiaires, par exemple supérieures ou égales à 8 et inférieures ou égales à -8 dans le cas d'un codage de Barker de longueur N égale à 11. Pour ce faire, il est impératif que le signal d'entrée ne soit pas altéré trop fortement par des défauts de transmission.

En effet, lorsque le signal reçu en entrée du décodeur DSSS comporte beaucoup d'erreurs, les pics en sortie du décodeur sont alors beaucoup plus bas et peuvent donc être sous le seuil des comparateurs. On risque alors d'introduire des erreurs car certains fronts d'horloge vont être manquant et des données seront fausses.

Ce phénomène est illustré à la figure 5, qui montre la sortie du décodeur DSSS en présence d' erreurs. Le signal de sortie du décodeur DSSS passe alors par un pic négatif dont la valeur est supérieure au seuil inférieur des comparateurs. Il en résulte donc une perte d'horloge au niveau du signal de sortie CLK du comparateur d'horloge et, également, une donnée fausse à l'instant où le front d'horloge aurait dû se produire.

Il existe la possibilité de baisser les seuils des comparateurs, mais on risquerait alors, avec des valeurs de seuil trop basses, de prendre en considération des pics en sortie du décodeur DSSS représentatifs d'erreurs et de générer ainsi des fronts d'horloge indésirables en sortie du comparateur d'horloge et des données supplémentaires.

On pourrait également mettre en place un système de correction utilisant des codes de corrections très puissants, mais qui auraient alors l'inconvénient d'être gourmands en puissance de calcul.

Une autre possibilité serait d'utiliser des codes d'étalement plus grands pour s'affranchir des erreurs, mais cela se ferait au détriment du débit.

Par ailleurs, la perte d'un front d'horloge en sortie du comparateur d'horloge crée un décalage dans la suite de bits qui compose le signal reçu, ce qui rends très difficile la correction d'erreurs. Par exemple, si un message de 8 bits est envoyé : « 10101010 » et qu'un front d'horloge est perdu on peut alors recevoir « 1011010 ». On reçoit alors 90 au lieu de 170.

Dans ce contexte, l'invention a pour but de remédier aux inconvénients cités, en proposant un dispositif de réception BPSK amélioré, qui évite de perdre des fronts horloges (ou de créer des fronts horloges indésirables) en sortie du comparateur d'horloge placé derrière le décodeur DSSS et qui évite autant que possible de capturer une mauvaise donnée, de manière à pouvoir décoder correctement les symboles d'un signal d'entrée même fortement altéré par des défauts de transmission de plusieurs éléments de symbole.

Avec cet objectif en vue, l'invention concerne un dispositif de réception adapté à un système de transmission utilisant un étalement de spectre à séquence directe, comprenant un décodeur pour décoder un signal numérique d'entrée composé de bits dont chacun, en fonction de sa valeur, est représenté par l'un ou l'autre de deux symboles répondant à un code d'étalement, chaque symbole étant constitué d'une série de N éléments de symbole distribués sur l'un ou l'autre de deux niveaux différents, les N éléments de symboles du premier symbole étant anti-corrélés aux N éléments de symboles correspondants du second symbole, ce dispositif comprenant un premier et un second comparateur propres à comparer l'amplitude du signal de sortie du décodeur à des valeurs de seuil inférieur et supérieur, le premier comparateur délivrant un signal de données représentatif des symboles décodés du signal d'entrée, comprenant un premier bit lorsque l'amplitude du signal de sortie du décodeur est supérieure à la valeur de seuil supérieur, et un deuxième bit lorsque l'amplitude du signal de sortie du décodeur est inférieure à la valeur de seuil inférieur, et le second comparateur délivrant un signal d'horloge pour la capture des données dudit signal de données, comprenant un front d'horloge dès que l'amplitude du signal de sortie du décodeur devient inférieure ou supérieure à la valeur de seuil inférieur et dès que ladite amplitude devient supérieure ou inférieure à la valeur de seuil supérieur, ledit dispositif étant caractérisé en ce qu'il comprend des premiers moyens de génération d'un signal d'horloge de remplacement pour la capture des données, calqué sur le signal d'horloge issu du comparateur d'horloge, des premier et second moyens de mémorisation cadencés par le signal d'horloge de remplacement pour mémoriser des données prises respectivement à partir du signal de données issu du comparateur de données et d'un signal binaire généré en sortie du décodeur, représentatif du signe du signal de sortie du décodeur, des seconds moyens de génération d'un signal d'horloge, décalé par rapport au signal d'horloge de remplacement, et des moyens de sélection de données pour capturer, à chaque front du signal d'horloge décalé, soit la donnée mémorisée issue du signal représentatif du signe du signal de sortie du décodeur en cas de constatation de la perte du front d'horloge précédent en sortie du comparateur d'horloge, soit la donnée mémorisée issue du signal de données sinon.

Selon un mode de réalisation, les premiers moyens de génération d'horloge comprennent un compteur recevant sur son entrée le signal d'horloge issu du comparateur d'horloge, ledit compteur étant prévu pour calculer la durée entre deux fronts de ladite horloge et pour comparer la durée ainsi calculée avec la longueur d'un bit du signal d'entrée étalé, le signal d'horloge de remplacement étant délivré par lesdits moyens de génération dès que la durée entre deux fronts d'horloge consécutifs est approximativement égale à ladite longueur d'un bit du signal d'entrée étalé.

Selon un mode de réalisation, les seconds moyens de génération comprennent un compteur recevant sur son entrée le signal d'horloge de remplacement issu des premiers moyens de génération d'horloge, ledit compteur étant prévu pour calculer la durée entre deux fronts de ladite horloge de remplacement et pour délivrer le signal d'horloge décalé par rapport à ladite horloge de remplacement d'une durée égale à la moitié de la longueur d'un bit du signal d'entrée étalé.

Avantageusement, le dispositif comprend des moyens de génération d'un signal de commande des moyens de sélection de données indiquant, à chaque front du signal d'horloge décalé, si le front d'horloge précédent du signal d'horloge issu du comparateur d'horloge est présent ou non.

De préférence, les moyens de génération du signal de commande comprennent une bascule placée dans un premier état logique à chaque front d'horloge du signal d'horloge décalé et dans un second état logique dès que le signal d'horloge issu du comparateur d'horloge présente un niveau 1.

De préférence, le premier et le second comparateur présentent des valeurs de seuils supérieur et inférieur réglables.

Selon un mode de réalisation, le décodeur comprend un filtre numérique à réponse impulsionnelle finie adapté au code d'étalement utilisé.

D'autres caractéristiques et avantages de la présente invention apparaîtront plus clairement à la lecture de la description suivante donnée à titre d'exemple illustratif et non limitatif et faite en référence aux figures annexées dans lesquelles :
- la figure 1 illustre schématiquement une chaîne de réception BPSK synchrone classique;
- la figure 2 illustre schématiquement la structure du décodeur DSSS de la figure 1, sous la forme d'un filtre à réponse impulsionnelle finie adapté au code d'étalement utilisé;
- la figure 3 est composée de deux diagrammes temporels dont le premier schématise un symbole codant un bit "1" dans le code de Barker de longueur 11 et dont le second schématise un symbole codant un bit "0" dans ce même code;
- la figure 4 illustre schématiquement un dispositif de réception BPSK modifiée selon la présente invention, et
- la figure 5 est composée de sept diagrammes temporels représentant le signal de sortie du décodeur DSSS et les différents signaux d'horloge et de données intervenant dans le dispositif de réception selon l'invention.

L'invention concerne donc un dispositif de réception, notamment adapté à un système de transmission utilisant une modulation binaire en phase de la porteuse par un message binaire sur lequel a été pratiqué un étalement de spectre à séquence directe. Ce dispositif comprend une première partie analogique radio-fréquences, transformant le signal reçu par l'antenne en un signal démodulé basse-fréquence, et une deuxième partie numérique avec des moyens de décodage permettant de supprimer l'étalement appliqué au message d'origine.

Ce dispositif est donc conçu pour recevoir et décoder un signal numérique d'entrée composé de bits dont chacun, en fonction de sa valeur "1" ou "0", est représenté par l'un ou l'autre de deux symboles tels qu'illustrés à la figure 3 dans le cas particulier où ces symboles correspondent à un code Barker de longueur 11.

Ces éléments de symbole sont délivrés à une fréquence fixe prédéterminée F correspondant à une période déterminée T = 1/F, et les N éléments de symboles A à K du symbole codant le bit "1" sont anti-corrélés aux N éléments de symboles A' à K' correspondants du symbole codant le bit "0".

Pour permettre de pallier la perte de fronts d'horloge de capture de données (ou l'apparition de fronts d'horloge indésirables) en sortie du comparateur d'horloge 5, on cherche à remplacer dès que possible l'horloge CLK de capture de la donnée par une nouvelle horloge.

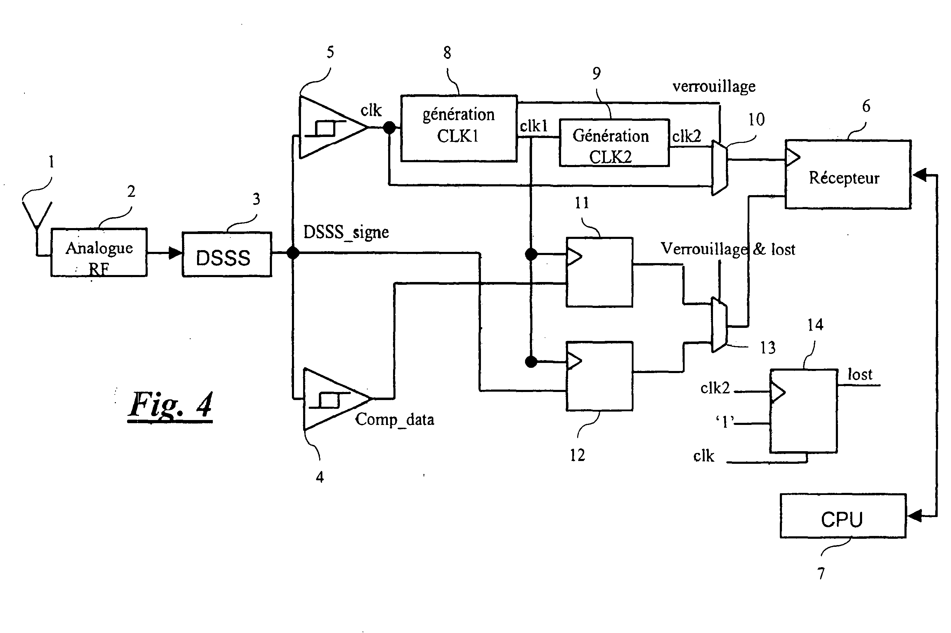

Ainsi, comme l'indique la figure 4, le dispositif de réception BPSK selon l'invention comprend des premiers moyens 8 de génération d'horloge, recevant sur leur entrée le signal d'horloge CLK issu du comparateur d'horloge 5 et fournissant en sortie un signal d'horloge CLK1 reproduisant l'horloge de capture de donnée CLK.

Pour ce faire, les moyens de génération d'horloge 8 comprennent un compteur, prévu pour compter la durée entre deux fronts d'horloge à la sortie du comparateur 5 générant l'horloge CLK et pour comparer la durée ainsi calculée avec la longueur d'un bit du message étalé. La séquence d'étalement étant connue, de même que le débit (soit la fréquence du signal à l'entrée du décodeur DSSS), la longueur d'un bit étalé est donc facilement accessible. Lorsque la durée entre deux fronts d'horloge CLK consécutifs est égale à la longueur d'un bit étalé, en prenant une certaine marge, par exemple à plus ou moins 10%, cela veut dire que l'on a décodé deux bits consécutifs et il est alors possible de remplacer le signal d'horloge CLK venant du comparateur 4 par le signal d'horloge CLK1 issu du compteur 8. Le signal d'horloge CLK1 de capture du signal de donnée ainsi recréé est représenté à la figure 5. Comme on peut le voir sur cette figure, le signal CLK1 présente alors avantageusement un front d'horloge en présence de l'erreur représentée à l'entrée du DSSS, se traduisant par un pic négatif en sortie du DSSS sous le seuil inf du comparateur d'horloge et engendrant en conséquence une perte de l'horloge de capture de donnée CLK à cet instant.

Ce système de génération d'horloge peut remplacer l'horloge de capture de donnée venant du comparateur dès que possible ou alors dès que la séquence de « start » du message a été détectée. Le système est alors verrouillé sur ce signal d'horloge CLK1 recréé et doit se déverrouiller dès que la séquence de « stop » a été décodé ou, quand on connaît la longueur de la trame envoyée, a la fin supposée de la trame.

Dans le cas ou l'horloge CLK de capture de donnée est remplacée durant la période de recherche de la séquence de « start », on peut prévoir un mécanisme de déverrouillage automatique actif après une durée égale à la durée de la séquence de « start » afin de ne pas rester verrouillé sur un mauvais signal.

De plus, en synchronisant le système sur le signal d'horloge recréé CLK1, on évite la création de fronts d'horloge supplémentaires dans le cas ou le signal serait erroné a un instant de la communication.

En recréant de cette manière le signal d'horloge de capture de données CLK1, on obtiendra de façon certaine tous les bits de données du message à décoder, puisque aucun front d'horloge de capture de donnée ne sera manquant ni aucun front indésirable ne sera créé. Il sera alors possible par la suite d'utiliser un système de de-entrelacement et de décodage de type Reed Solomon (la donnée envoyée étant entrelacée et codée avec des codes de Reed Solomon) puisque, l'horloge de capture étant recrée, aucun décalage dans la trame reçu n'est généré.

Cependant, comme on peut le constater sur la figure 5 au niveau de la zone d'erreur, lorsqu'un front d'horloge CLK est manquant en sortie du comparateur d'horloge 4, cela signifie que le signal de donnée risque également d'être défectueux. En effet, l'amplitude du signal en sortie du décodeur DSSS ne passant pas sous le seuil inférieur inf, elle ne fera pas basculer la sortie du comparateur de donnée 4. La valeur du signal de donnée comp_data en sortie du comparateur de donnée 4 en cas de perte de front d'horloge est donc la valeur au front d'horloge précédent puisque le comparateur n'a pas basculé. Cela peut être exact ou non. En l'occurrence, selon l'exemple de la figure 5, le signal de donnée comp_data en sortie du comparateur de donnée reste à « 1 », alors qu'il aurait dû basculer à « 0 » en l'absence d'erreur si le pic négatif en sortie du DSSS était normalement passé sous le seuil inf.

L'invention consiste alors, lorsque l'on constate la perte d'un front d'horloge, à récupérer la donnée non plus sur la base du signal comp_data fourni en sortie du comparateur de donnée 4, mais sur la base d'un signal généré en sortie du décodeur DSSS fournissant sur un bit le signe du signal en sortie du décodeur DSSS.

En effet, on constate également sur la figure 5 que, dans la zone d'erreur, l'amplitude du signal en sortie du décodeur DSSS est légèrement supérieure à celle qu'elle devrait être mais que toutefois, son signe reste correct, en l'occurrence négatif.

Or, comme expliqué précédemment, la sortie du décodeur DSSS fournit des pics de synchronisation, dont le signe donne la valeur du bit du message d'origine décodé. Plus particulièrement, selon l'exemple de réalisation, le symbole codant le bit 0 en entrée du décodeur DSSS se manifeste en sortie par un pic négatif de valeur -11 et le symbole codant le bit 1 en entrée du décodeur se manifeste en sortie par un pic positif de valeur 11.

Cette caractéristique est liée aux propriétés mathématiques des codes d'étalement utilisés (Barker) et elle est encore plus flagrante avec des codes d'étalement longs.

Le signal DSSS_signe ainsi généré représentatif du signe du signal en sortie du décodeur DSSS est également représenté à la figure 5. Il bascule à « 1 » lorsqu'un pic positif a été détecté et à « 0 » lorsqu'un pic négatif a été détecté, indépendamment de la comparaison de la valeur du pic avec les valeurs de seuil inférieur et supérieur des comparateurs.

Le dispositif selon l'invention va donc utiliser sa propre horloge CLK1 recréée comme décrit plus haut, mais va également vérifier si des fronts d'horloge CLK sont manquants et on utilisera dans ce cas, pour récupérer la donnée au niveau du récepteur 6, le signal DSSS_signe qui est la capture du bit de signe du signal en sortie du décodeur DSSS au lieu du signal de donnée comp_data en sortie du comparateur 4.

Pour ce faire et comme déjà expliqué plus haut, on va d'abord remplacer l'horloge CLK venant du comparateur 4 par l'horloge interne CLK1. Des seconds moyens 9 de génération d'horloge comprenant un compteur sont alors prévus, recevant sur leur entrée le signal d'horloge de remplacement CLK1 issu des premiers moyens de génération d'horloge 8 et fournissant en sortie un signal d'horloge CLK2, représenté à la figure 5, décalé par rapport au signal d'horloge CLK1 d'une durée égale à la moitié de la longueur d'un bit étalé.

Ainsi, lorsque deux fronts consécutifs d'horloge CLK ont été détectés et que le signal d'horloge CLK en sortie du comparateur d'horloge 4 a été remplacé par le signal d'horloge CLK1, le système est verrouillé et va alors travailler sur la base de temps fournie par le signal d'horloge CLK2. En pratique, des moyens de sélection d'horloge, formés par une porte logique 10 et commandés par un signal de verrouillage issu des premiers moyens 8 de génération d'horloge, permettent de délivrer au récepteur 6, en tant que signal d'horloge, le signal CLK2 généré en sortie des seconds moyens 9 de génération d'horloge, qui est décalé d'une demi-période par rapport au signal CLK1.

Ce décalage va pouvoir être mis à profit pour ensuite vérifier la présence ou non d'un front d'horloge sur la sortie du comparateur 5 qui génère l'horloge CLK.

Des moyens 14 sont alors prévus pour générer un signal « lost », indiquant, à chaque front du signal CLK2, si un front d'horloge du signal CLK issu du comparateur d'horloge 4 était présent la demi-période précédente.

Si le signal « lost » est déterminé égal à 0, signifiant qu'aucun front d'horloge CLK en sortie du comparateur 5 n'a été perdu, alors la donnée capturé par le récepteur 6 est celle venant du signal de sortie comp_data du comparateur de donnée 4.

Sinon, lorsque le signal « lost » est déterminé égal à 1, signifiant dans ce cas qu'un front d'horloge CLK en sortie du comparateur 5 a été perdu la demi-période précédente, la donnée capturée est celle venant du signal DSSS_signe, représentatif du signe du signal en sortie du décodeur DSSS.

Le signal de données capturées selon ce principe est représenté à la figure 5.

Plus précisément, les moyens 14 de génération du signal « lost » comprennent une bascule qui est mise à « 1 » à chaque front d'horloge du signal CLK2 et qui est mise à « 0 » dès que la sortie du comparateur d'horloge 5 passe à « 1 », c'est-à-dire à chaque fois qu'il y a un niveau 1 sur l'horloge CLK. Par défaut, la sortie de la bascule 14 est donc mise à « 0 », ce qui veut dire qu'on n'a pas perdu l'horloge en sortie du comparateur d'horloge 5.

Pour la capture de la donnée par le récepteur 6 sur le front d'horloge CLK2 selon l'un ou l'autre du signal comp_data généré en sortie du comparateur de données 4 et du signal DSSS_signe représentatif du signe du signal de sortie du décodeur DSSS 3, des bascules 11 et 12 associées à des moyens de sélection 13 sont mis en oeuvre.

Les deux bascules 11 et 12 sont cadencées par le signal d'horloge CLK1. Elles permettent de conserver en mémoire, pendant la période de temps entre un front d'horloge CLK1 et un front d'horloge CLK2 suivant, l'information binaire correspondant à la donnée capturée respectivement à partir du signal comp_data et du signal DSSS_signe.

Les signaux de sortie des bascules 11 et 12 sont fournis à la porte logique 13, permettant de sélectionner, en fonction des valeurs des signaux « verrouillage » et « lost », le signal de donnée issu soit de la bascule 11, soit de la bascule 12.

Ainsi, lorsque le système est verrouillé et que le signal « lost » est égal à « 1 », signifiant donc qu'un front d'horloge CLK en sortie du comparateur 5 a été perdu la demi-période précédente, le signal de donnée capturé sur le front CLK1 de remplacement et fourni par la porte logique 13 au récepteur 6, est celui pris en sortie de la bascule 12 correspondant au signal DSSS_signe. Par contre, lorsque le signal « lost » est égal à 0, signifiant donc qu'aucun front d'horloge CLK en sortie du comparateur 4 n'a été perdu, alors le signal de donnée capturé sur le front CLK1 de remplacement et fourni par la porte logique 13 au récepteur 6, est celui pris en sortie de la bascule 11 correspondant au signal comp_data.

Le dispositif de réception selon l'invention, avec son mécanisme de récupération de donnée tel qu'il vient d'être décrit, basé sur la mise en oeuvre d'une horloge de capture de donnée de remplacement et sur une capture du signal de donnée basée sur le signe du signal en sortie du décodeur DSSS en cas de constatation de la perte d'un front d'horloge en sortie du comparateur d'horloge, permet avantageusement d'améliorer significativement les performances du dispositif de réception en termes de taux d'erreur, notamment dans le cas de codes d'étalement courts.

## Revendications

1. Dispositif de réception adapté à un système de transmission utilisant un étalement de spectre à séquence directe, comprenant un décodeur (3) pour décoder un signal numérique d'entrée composé de bits dont chacun, en fonction de sa valeur, est représenté par l'un ou l'autre de deux symboles (A-K; A'-K') répondant à un code d'étalement, chaque symbole étant constitué d'une série de N éléments de symbole (A-K; A'-K') distribués sur l'un ou l'autre de deux niveaux différents, les N éléments de symboles du premier symbole (A-K) étant anti-corrélés aux N éléments de symboles correspondants du second symbole (A'-K'), ce dispositif comprenant un premier et un second comparateur (4, 5) propres à comparer l'amplitude du signal de sortie (sortie_DSSS) du décodeur (3) à des valeurs de seuil inférieur (inf) et supérieur (sup), le premier comparateur (4) délivrant un signal de données (comp_data) représentatif des symboles décodés du signal d'entrée, comprenant un premier bit ("1") lorsque l'amplitude du signal de sortie du décodeur est supérieure à la valeur de seuil supérieur, et un deuxième bit ("0") lorsque l'amplitude du signal de sortie du décodeur est inférieure à la valeur de seuil inférieur, et le second comparateur (5) délivrant un signal d'horloge (CLK) pour la capture des données dudit signal de données (comp_data), comprenant un front d'horloge dès que l'amplitude du signal de sortie du décodeur devient inférieure ou supérieure à la valeur de seuil inférieur et dès que ladite amplitude devient supérieure ou inférieure à la valeur de seuil supérieur, ledit dispositif étant **caractérisé en ce qu'**il comprend des premiers moyens (8) de génération d'un signal d'horloge de remplacement (CLK1) pour la capture des données, calqué sur le signal d'horloge (CLK) issu du comparateur d'horloge (5), des premier et second moyens de mémorisation (11, 12) cadencés par le signal d'horloge de remplacement (CLK1) pour mémoriser des données prises respectivement à partir du signal de données (comp_data) issu du comparateur de données (4) et d'un signal binaire (DSSS_signe) généré en sortie du décodeur, représentatif du signe du signal de sortie du décodeur, des seconds moyens (9) de génération d'un signal d'horloge (CLK2), décalé par rapport au signal d'horloge de remplacement (CLK1), et des moyens (13) de sélection de données pour capturer, à chaque front du signal d'horloge décalé (CLK2), soit la donnée mémorisée issue du signal (DSSS_signe) représentatif du signe du signal de sortie du décodeur en cas de constatation de la perte du front d'horloge (CLK) précédent en sortie du comparateur d'horloge (5), soit la donnée mémorisée issue du signal de données (comp_data) sinon.

2. Dispositif de réception selon la revendication 1, **caractérisé en ce que** les premiers moyens (8) de génération d'horloge comprennent un compteur recevant sur son entrée le signal d'horloge (CLK) issu du comparateur d'horloge (5), ledit compteur étant prévu pour calculer la durée entre deux fronts de ladite horloge (CLK) et pour comparer la durée ainsi calculée avec la longueur d'un bit du signal d'entrée étalé, le signal d'horloge de remplacement (CLK1) étant délivré par lesdits moyens (8) de génération dès que la durée entre deux fronts d' horloge (CLK) consécutifs est approximativement égale à ladite longueur d'un bit du signal d'entrée étalé.

3. Dispositif de réception selon la revendication 1 ou 2, **caractérisé en ce que** les seconds moyens (9) de génération comprennent un compteur recevant sur son entrée le signal d'horloge de remplacement (CLK1) issu des premiers moyens de génération d'horloge (8), ledit compteur étant prévu pour calculer la durée entre deux fronts de ladite horloge de remplacement (CLK1) et pour délivrer le signal d'horloge (CLK2) décalé par rapport à ladite horloge de remplacement (CLK1) d'une durée égale à la moitié de la longueur d'un bit du signal d'entrée étalé.

4. Dispositif de réception selon l'une quelconque des revendications 1 à 3, **caractérisé en ce qu**'il comprend des moyens (14) de génération d'un signal (lost) de commande des moyens (13) de sélection de données indiquant, à chaque front du signal d'horloge décalé (CLK2), si le front d'horloge précédent du signal d'horloge (CLK) issu du comparateur d'horloge (5) est présent ou non.

5. Dispositif de réception selon la revendication 4, **caractérisé en ce que** les moyens (14) de génération du signal (lost) de commande comprennent une bascule placée dans un premier état logique à chaque front d'horloge du signal d'horloge décalé (CLK2) et dans un second état logique dès que le signal d'horloge (CLK) issu du comparateur d'horloge (5) présente un niveau 1.

6. Dispositif de réception selon l'une quelconque des revendications 1 à 5, **caractérisé en ce** le premier et le second comparateur (4, 5) présentent des valeurs de seuils supérieur et inférieur réglables.

7. Dispositif de réception selon l'une quelconque des revendications 1 à 6, **caractérisé en ce que** le décodeur (3) comprend un filtre numérique à réponse impulsionnelle finie adapté au code d'étalement utilisé.

## Claims

1. Reception device adapted to a transmission system that uses a direct sequence spread spectrum that includes a decoder (3) for decoding a digital input signal composed of bits, in which each bit, depending on its value, is represented by one or the other of two symbols (A-K; A'-K') that respond to a spread code, each symbol being composed of a sequence of N symbol elements (A-K; A'-K') distributed over one or the other of two different levels, the N symbol elements of the first symbol (A-K) being negatively correlated to the corresponding N symbol elements of the second symbol (A'-K'), this device including a first and a second comparator (4,5) adapted for comparing the amplitude of the output signal (DSSS output) of the decoder (3) with lower (inf) and upper (sup) threshold values, the first comparator (4) delivering a data signal (comp_data) that is representative of the decoded symbols of the input signal, which includes a first bit ("1") when the amplitude of the output signal of the decoder is greater than the upper threshold value, and a second bit ("0") when the amplitude of the output signal of the decoder is lower than the lower threshold value, and the second comparator (5) delivering a clock signal (CLK) for capturing the data of said data signal (comp_data) and that includes a clock pulse edge as soon as the amplitude of the output signal of the decoder becomes lower than or greater than the lower threshold value and as soon as said amplitude becomes greater than or lower than the upper threshold value, said device being **characterized in that** it includes a first means (8) for generating a replacement clock signal (CLK1) for data capture, traced on the clock signal (CLK) originating from the clock comparator (5), first and second storage means (11, 12) rated by the replacement clock signal (CLK1) for storing the data taken respectively from the data signal (comp_data) originating from the data comparator (4) and from a binary signal (DSSS_sign) generated at the output of the decoder, representative of the output signal sign of the decoder, a second means (9) for generating a clock signal (CLK2) that is offset with respect to the replacement clock signal (CLK1), and means (13) for selecting data for capturing, at each pulse edge of the offset clock signal (CLK2), either the stored data originating from the signal (DSSS_sign) that is representative of the sign of the decoder output signal in case the loss of the previous clock pulse edge (CLK) is noticed at the output of the clock comparator (5), or the stored data originating from the data signal (comp_data) in the opposite case.

2. Reception device according to claim 1, **characterized in that** the first clock generation means (8) include a counter that receives, on input, the clock signal (CLK) originating from the clock comparator (5), said counter being designed to calculate the duration between two pulse edges of said clock (CLK) and to compare the duration thus calculated with the length of a bit of the spread input signal, the replacement clock signal (CLK1) being delivered by said generation means (8) as soon as the duration between two consecutive clock pulse edges (CLK) is approximately equal to said length of a bit of the spread input signal.

3. Reception device according to claim 1 or 2, **characterized in that** the second generation means (9) include a counter that receives, on input, the replacement clock signal (CLK1) originating from the first clock generation means (8), said counter being designed to calculate the duration between two pulse edges of said replacement clock (CLK1) and to deliver the clock signal (CLK2) that is offset with respect to said replacement clock (CLK1) by a duration equal to half the length of a bit of the spread input signal.

4. Reception device according to any of claims 1 to 3, **characterized in that** it includes means (14) for generating a command signal (lost) for commanding the data selection means (13) indicating, at each pulse edge of the offset clock signal (CLK2), whether the previous clock pulse edge of the clock signal (CLK) originating from the clock comparator (5) is present or not.

5. Reception device according to claim 4, **characterized in that** the generation means (14) of the command signal (lost) include a flip-flop placed in a first logical status at each clock pulse edge of the offset clock signal (CLK2) and in a second logical status as soon as the clock signal (CLK) originating from the clock counter (5) presents a level 1.

6. Reception device according to any of claims 1 to 5, **characterized in that** the first and second comparators (4,5) present adjustable upper and lower threshold values.

7. Reception device according to any of claims 1 to 6, **characterized in that** the decoder (3) includes a finite impulse response digital filter adapted to the spreading code used.

## Patentansprüche

1. An ein Direct Sequence Spread Spectrum, DSSS, Übertragungssystem angepaßte Empfangsvorrichtung mit einem Decoder (3) zum Decodieren eines digitalen Eingangssignals, das aus Bits zusammengesetzt ist, von denen jedes abhängig von seinem Wert durch das eine oder das andere von zwei Symbolen (A-K, A'-K') dargestellt wird, abhängig von einem verteilten (Spread) Code, wobei jedes Symbol durch eine Reihe von N Symbolelementen (A-K, A'-K') gebildet wird, die auf den einen oder den anderen von zwei verschiedenen Pegeln verteilt sind, wobei die N Symbolelemente des ersten Symbols (A-K) zu den korrespondierenden N Symbolelementen des zweiten Symbols (A'-K') anti-korreliert sind, wobei die Vorrichtung einen ersten und einen zweiten Vergleicher (4, 5) umfaßt, die zum Vergleichen der Amplitude des Ausgangssignals (sortie_DSSS) des Decoders (3) mit unteren (inf) und oberen (sup) Schwellwerten geeignet sind, wobei der erste Vergleicher (4) ein Datensignal (comp_data) abgibt, welches die decodierten Symbole des Eingangssignals repräsentiert, mit einem ersten Bit ("1"), wenn die Amplitude des Ausgangssignals des Decoders größer ist als der obere Schwellwert, und mit einem zweiten Bit ("0"), wenn die Amplitude des Ausgangssignals des Decoders kleiner ist als der untere Schwellwert, und wobei der zweite Vergleicher (5) ein Taktsignal (CLK) für das Erfassen von Daten des Datensignals (comp_data) ausgibt, mit einer Taktflanke, sobald die Amplitude des Ausgangssignals des Decoders kleiner oder größer wird als der untere Schwellwert und sobald diese Amplitude größer oder kleiner wird als der obere Schwellwert, wobei die Vorrichtung **dadurch gekennzeichnet ist, daß** sie umfaßt: erste Mittel (8) zum Erzeugen eines Ersatztaktsignals (CLK1) zum Erfassen von Daten, welches auf das von dem Taktvergleicher (5) ausgegebene Taktsignal abgebildet wird; erste und zweite Speichermittel (11, 12), welche mit dem Ersatztaktsignal (CLK1) getaktet werden, zum Speichern von Daten, die ausgehend von dem von dem Datenvergleicher (4) ausgegebenen Datensignal (comp_data) bzw. von einem digitalen Signal (DSSS_signe), welches am Ausgang des Decoders erzeugt wird und repräsentativ für das Vorzeichen des Ausgangssignal des Decoders ist, erfaßt werden; zweite Mittel (9) zum Erzeugen eines Taktsignals (CLK2), das im Verhältnis zu dem Ersatztaktsignal (CLK1) verschoben ist; und Mittel (13) zum Auswählen von Daten für die Erfassung bei jeder Flanke des verschobenen Taktsignals (CLK2), und zwar der gespeicherten Daten, die ausgehend vom Signal (DSSS_signe), welches für das Vorzeichen des Ausgangssignals des Decoders repräsentativ ist, erfaßt wurden, wenn der Verlust der vorangehenden Taktflanke (CLK) am Ausgang des Taktvergleichers (5) festgestellt wird, und andernfalls der gespeicherten Daten, die ausgehend von dem Datensignal (comp_data) erfaßt wurden.

2. Empfangsvorrichtung nach Anspruch 1, **dadurch gekennzeichnet , daß** die ersten Mittel (8) zum Erzeugen des Taktsignals einen Zähler umfassen, der an seinem Eingang das Taktsignal (CLK) empfängt, das von dem Taktvergleicher (5) ausgegeben wird, wobei der Zähler vorgesehen ist, die Dauer zwischen zwei Flanken des Taktes (CLK) zu berechnen und die so berechnete Dauer mit der Länge eines Bits des verteilten (Spread) Eingangssignals zu vergleichen, wobei das Ersatztaktsignal (CLK1) von diesen Mitteln (8) abgegeben wird, sobald die Dauer zwischen zwei aufeinanderfolgenden Flanken des Taktes (CLK) ungefähr gleich der Länge eines Bits des verteilten (Spread) Eingangssignals ist.

3. Empfangsvorrichtung nach Anspruch 1 oder 2, **dadurch gekennzeichnet, daß** die zweiten Mittel (9) zum Erzeugen eines Taktsignals einen Zähler umfassen, der an seinem Eingang das Ersatztaktsignal (CLK) empfängt, welches von den ersten Mitteln zum Erzeugen des Taktsignals (8) ausgegeben wird, wobei der Zähler vorgesehen ist, die Dauer zwischen zwei Flanken dieses Ersatztaktsignals (CLK1) zu berechnen und das im Verhältnis zu diesem Ersatztaktsignal (CLK1) verschobene Taktsignal (CLK2) auszugeben, dessen Dauer gleich der Hälfte der Länge eines Bits des verteilten (Spread) Eingangssignals ist.

4. Empfangsvorrichtung nach einem der Ansprüche 1 bis 3, **dadurch gekennzeichnet, daß** sie Mittel (14) zum Erzeugen eines Signals (lost) zum Steuern der Mittel (13) zum Auswählen der Daten aufweist, welche bei jeder Flanke des verschobenen Taktsignals (CLK2) anzeigen, ob die vorangehende Taktflanke des Taktsignals (CLK), das von dem Taktvergleicher (5) ausgegeben wird, vorhanden ist oder nicht.

5. Empfangsvorrichtung nach Anspruch 4, **dadurch gekennzeichnet , daß** die Mittel (14) zum Erzeugen des Steuersignals (lost) ein Flip-Flop aufweisen, das bei jeder Taktflanke des verschobenen Taktsignals (CLK2) in einen ersten logischen Zustand gesetzt wird und das in einen zweiten logischen Zustand gesetzt wird, sobald das Taktsignal (CLK), das von dem Taktvergleicher (5) ausgegeben wird, einen logischen Pegel "1" hat.

6. Empfangsvorrichtung nach einem der vorangehenden Ansprüche 1 bis 5, **dadurch gekennzeichnet, daß** der erste und der zweite Vergleicher (4, 5) einstellbare obere und untere Schwellwerte haben.

7. Empfangsvorrichtung nach einem der Ansprüche 1 bis 6, **dadurch gekennzeichnet, daß** der Decoder (3) ein digitales Filter mit finiter Impulsantwort, FIR, aufweist, das auf den verwendeten verteilten (Spread) Code, eingestellt ist.
